# EUROPÄISCHE PATENTSCHRIFT

(11) **EP 2 965 602 B1**
(45) Veröffentlichungstag und Bekanntmachung des Hinweises auf die Patenterteilung: **04.10.2017**
(21) Anmeldenummer: 15401062.3
(22) Anmeldetag: 06.07.2015
(51) Int. Cl.: A01B 61/04, A01C 7/20, F16F 1/54

(54) **SÄMASCHINE**
SOWING MACHINE
SEMOIR

(30) Priorität: 08.07.2014 DE 102014109486
(43) Veröffentlichungstag der Anmeldung: 13.01.2016
(73) Patentinhaber: Amazonen-Werke H. Dreyer GmbH & Co. KG, 49205 Hasbergen (DE)
(72) Erfinder: Fankhauser, Carlos Fernando, 27798 Hude (DE)

(56) Entgegenhaltungen:
- WO-A1-2014/051507
- DE-A1- 10 343 466
- DE-A1-102009 058 342

## Beschreibung

Die Erfindung betrifft eine Sämaschine mit einem Scharbalken, an dem Schararme jeweils über eine elastische Lagerung so verbunden sind, dass sie sich in einem gewissen Maß um den Scharbalken drehen können.

Solche Sämaschinen sind bereits aus dem Stand der Technik bekannt.

Für elastische Lagerungen werden aus Kostengründen und der Einfachheit halber häufig Gummilagerungen verwendet. So zeigt beispielsweise die WO 2012/078108 eine durch eine Gummilagerung gebildete Gelenkanordnung von Säscharen an einem Tragbalken. Über die Gummilagerung lässt sich eine in Richtung des Bodens wirkende Federkraft auf die Säschare erzeugen. Durch die Ausgestaltung der Gelenkanordnung als Gummilagerung ergibt sich jedoch nicht nur in aufrechter Ebene sondern auch in seitlicher Richtung eine gewisse Nachgiebigkeit. Das ist in vielen Fällen nicht erwünscht. Die DE 10 2009 058342 A1 offenbart eine Sämaschine gemäß dem Oberbegriff des Anspruchs 1.

Es ist daher Aufgabe der Erfindung, ohne Einschränkung der Nachgiebigkeit in aufrechter Ebene die Nachgiebigkeit in seitlicher Richtung zu reduzieren.

Diese Aufgabe wird bei der Sämaschine der eingangs genannten Art erfindungsgemäß dadurch gelöst, dass Kräfte, die parallel zum Scharbalken auf die Schararme wirken, im Wesentlichen unelastisch abgefangen werden.

Dies ermöglicht beispielsweise bei unebenen Gegebenheiten des Bodens eine geeignete Federung und gleichzeitig wird verhindert, dass die Schararme seitlich ausweichen.

Mit anderen Worten kann eine mögliche Drehung um den Scharbalken beibehalten werden, gleichzeitig kann aber verhindert werden, dass die Schararme seitlich, insbesondere in einer Ebene senkrecht zur Fahrtrichtung, kippen. Insbesondere können Kippbewegungen der Schararme aus einer Ebene parallel zur Fahrtrichtung heraus unterdrückt werden.

Es sei dabei angemerkt, dass der Scharbalken im Wesentlichen horizontal zum Boden und im Wesentlichen senkrecht zur Fahrtrichtung angeordnet sein kann. Säschare der Sämaschine können mittels der Schararme mit dem Scharbalken verbunden sein. Die Schararme können im Wesentlichen parallel zur Fahrtrichtung angeordnet sein. Die Schararme können insbesondere derart ausgebildet und angeordnet sein, dass die daran aufgehängten Säschare den Boden berühren, insbesondere in diesen teilweise eindringen können.

"In einem gewissen Maß rotierbar" kann in dieser Anmeldung bedeuten, dass ein Element sich im Rahmen des Elastizitätsmoduls eines Federelements drehen kann, insbesondere beispielsweise um bis zu 5°, insbesondere bis zu 10°, vorzugsweise bis zu 20°, vorzugsweise bis zu 40°, vorzugsweise bis zu 60°.

Die Sämaschine umfasst erfindungsgemäß mindestens ein Stützelement, wobei das Abfangen der parallel zum Scharbalken wirkenden Kräfte mittels des Stützelements erfolgt. Das Stützelement kann insbesondere unmittelbar an einem, idealerweise jedoch beiden, Enden der Lagerung angeordnet sein. Dabei kann das Stützelement innen und/oder außen an den Enden der Lagerung angeordnet sein (mit anderen Worten: im Inneren und/oder außerhalb der Lagerung). Das bedeutet, dass das Stützelement in die Lagerung eingepasst oder seitlich auf diese aufgebracht werden kann.

Das Stützelement ist formschlüssig und/oder kraftschlüssig mit dem Scharbalken und/oder mit mindestens einem Teil eines Federelements der Lagerung angeordnet. Das Stützelement kann ein oder mehrere Stellelemente umfassen, die zum Herstellen des Kraft- bzw. Formschlusses ausgebildet sind. Beispielsweise kann es sich hierbei um Stellschrauben handeln. Der Scharbalken kann ein mehrkantiger Scharbalken sein. In diesem Fall kann in jedem Stützelement für jede Fläche des Scharbalkens mindestens ein Stellelement vorgesehen sein. Das Stützelement kann einen Flansch umfassen. Alternativ oder zusätzlich kann das Stützelement eine Schelle umfassen. Die Schelle kann zur Befestigung des Stützelements an dem Scharbalken und/oder zum Herstellen des oben beschriebenen Kraft- bzw. Formschlusses ausgebildet sein.

Das Stützelement kann aufsteckbar sein, insbesondere entlang des Scharbalkens aufsteckbar. Dies hat den Vorteil, dass das Stützelement aus einem Stück gefertigt sein kann. Das gewährleistet eine hohe Stabilität des Stützelements selbst bei starker Belastung durch die parallel zum Scharbalken wirkenden Kräfte.

Das Stützelement kann mindestens zwei Teile umfassen, die derart ausgebildet sind, dass sie formschlüssig und/oder kraftschlüssig um den Scharbalken und/oder mindestens einen Teil des Federelements gelegt und miteinander verbunden werden können. Dies hat den Vorteil, dass die Stützelement auch nachträglich an den Scharbalken angebracht werden kann und nicht beim Aufbau der Säschar mit eingebaut werden muss.

Das Stützelement kann jeweils an der entsprechenden Lagerung befestigbar sein. In diesem Fall ist das Stützelement derart ausgebildet, dass es fest an der Lagerung befestigt ist und in gewissen Maß rotierbar um den Scharbalken angeordnet ist. Die oben erläuterte Definition von "in gewissen Maß" ist auch hier anzuwenden.

Es kann jeweils ein Stützelement an jeder Seite der Lagerung vorgesehen sein, die formschlüssig und/oder kraftschlüssig mit dem Scharbalken und/oder mindestens einem Teil des Federelements angeordnet und nicht an der Lagerung befestigt sind, wobei die Stützelemente aufgrund ihrer Form eine Begrenzung darstellen, die eine Kippbewegung der Schararme begrenzt, beispielsweise in Form zweier Scheiben, die eine Drehbewegung um den Scharbalken führen.

Das Federelement kann einteilig oder mehrteilig ausgebildet sein. Das Federelement kann ausschließlich in der Lagerung angeordnet sein oder sich zumindest teilweise weiter entlang des Scharbalkens erstrecken als die Lagerung.

Das Federelement kann in Form von Sprungfedern im Inneren der Lagerung oder in Form einer Gummifederung, die entlang des Scharbalkens angeordnet ist, ausgebildet sein. Insbesondere kann zumindest ein Teil Gummifederung sich weiter entlang des Scharbalkens erstrecken, als die Lagerung.

Insbesondere kann das Federelement einen Gummischlauch umfassen, der entlang des Scharbalkens angeordnet ist und den Scharbalken umfänglich umschließt.

Alternativ oder zusätzlich kann das Federelement Gummirollen umfassen, die, insbesondere im Inneren der Lagerung, entlang des Scharbalkens angeordnet sind. Alternativ oder zusätzlich können an einem oder beiden Enden der Lagerung die Stützelemente, insbesondere in Form von Scheiben, derart angeordnet sein, dass sie ein Verrutschen der Gummirollen entlang des Scharbalkens verhindern.

Die Sämaschine kann sowohl die oben beschriebenen Gummirollen als auch den Gummischlauch umfassen und Stützelemente an beiden Enden der Lagerung, die derart angeordnet sind, dass sie ein Verrutschen der Gummirollen entlang des Scharbalkens verhindern. Die Stützelemente können dazu formschlüssig und/oder kraftschlüssig mit dem Gummischlauch angeordnet sein. Insbesondere können die Stützelemente in Form von Scheiben ausgebildet sein, die die Lagerung seitlich komplett abdecken.

Umfasst die Sämaschine mehrere Stützelemente, so können verschiedene Stützelemente vorgesehen sein oder alle Stützelemente können gleich sein.

Es sei angemerkt, dass die oben für jeweils ein Stützelement, eine Lagerung oder ein Federelement beschriebenen Merkmale auch für mehrere, insbesondere alle, Stützelemente, Lagerungen oder Federelemente zutreffen können

Weitere Merkmale und Vorteile der Erfindung werden nachfolgend anhand der Fig. weiter erläutert.

Dabei zeigt
- Fig. 1: eine schematische, nicht maßstabsgetreue Darstellung einer Sämaschine mit einem Scharbalken, Schararmen und Säscharen,
- Fig. 2: eine schematische, nicht maßstabsgetreue Darstellung eines Ausführungsbeispiels in Schrägansicht,
- Fig. 3a und 3b: schematische, nicht maßstabsgetreue Darstellungen des Ausführungsbeispiels in einem Schnitt in einer Ebene senkrecht zum Boden und parallel zur Fahrtrichtung und
- Fig. 4a und 4b: schematische, nicht maßstabsgetreue Darstellungen des Ausführungsbeispiels in einem Schnitt in einer Ebene parallel zum Boden.

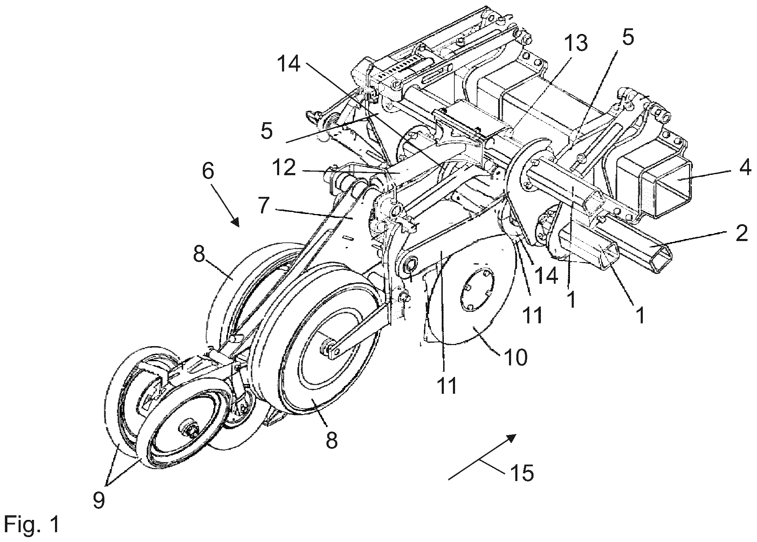

In Fig. 1 ist ein Ausschnitt einer beispielhaften Sämaschine gezeigt, die in diesem Fall nicht selbstfahrend ist, sondern an eine Zugmaschine koppelbar ist. Selbstverständlich ist auch eine selbstfahrende Sämaschinen denkbar. Die Fig. 1 zeigt unter anderem einen Scharbalken 1, einen Tragbalken 2, einen Querbalken 4 und Halterungselemente 5. Außerdem ist die Säschar 6 mit dem Scharkörper 7, den Tiefenführungsrollen 8 und Andrückrollen 9 gezeigt. In der Fig. ist auch eine Düngeschar 10 gezeigt. Des Weiteren zeigt die Fig. die Schararme 11 und den Scharlenker 12, der über eine Gummilagerung 13 auf einem der Scharbalken gelagert ist. Drehlagerungen 14 sind hier ebenfalls gezeigt. Die Fahrtrichtung ist mit dem Pfeil 15 gekennzeichnet. Wie hier zu erkennen ist verlaufen die Scharbalken, Tragbalken und Querbalken quer zur Fahrtrichtung und sind jeweils mehreckig ausgebildet. Die Scharhalter verlaufen im Wesentlichen parallel zur Fahrtrichtung. An den Scharhaltern sind jeweils die Schararme gelagert. Die übrigen in der Fig. gezeigten Bestandteile der Sämaschine werden hier nicht näher erläutert, da sie für die Erfindung nicht unmittelbar relevant und/oder bereits bekannt sind.

Die erfindungsgemäße Sämaschine kann, muss aber nicht die oben beschriebenen und/oder in Fig. 1 gezeigten Elemente umfassen und die Elemente können weggelassen oder ausgetauscht werden. Fig. 1 veranschaulicht vielmehr eine mögliche Anordnung der verschiedenen Elemente.

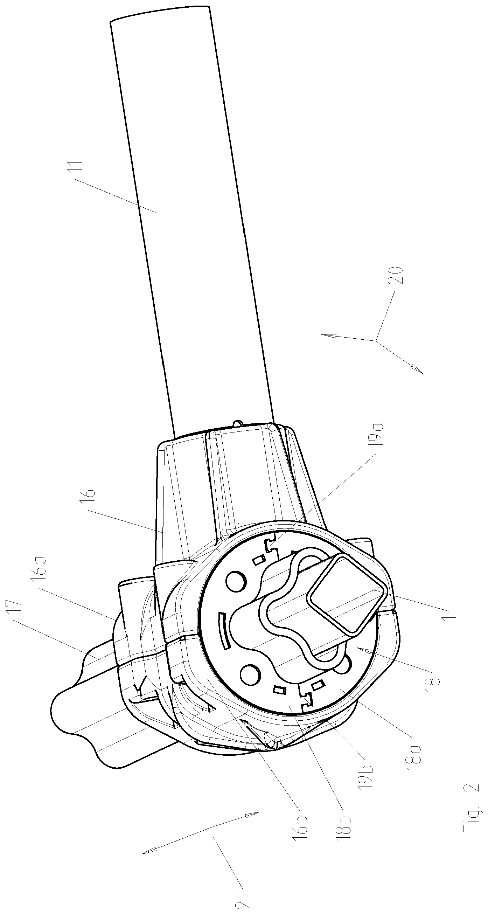

In der in Fig. 2 gezeigten Schrägansicht, ist neben dem Scharbalken 1, einem Schararm 11, der beispielhaft für mehrere Schararme dargestellt ist, und der Lagerung 16, mit einem ersten Ende 16a und einem zweiten Ende 16b, auch ein Federelement gezeigt. Das Federelement umfasst einen Gummischlauch 17, der den Scharbalken umfänglich umschließt und sich entlang des Scharbalkens weiter erstreckt, als das Lager. Der Scharbalken ist in diesem Beispiel nicht auf seiner gesamten Länge von dem Gummischlauch umschlossen, dies ist jedoch ebenfalls möglich.

Alternativ kann auch eine Federlagerung vorgesehen sein, welche ausschließlich im Inneren der Lagerung vorgesehen ist.

Des Weiteren ist ein Stützelement 18 gezeigt, das in diesem Fall zwei Teile 18a und 18b umfasst. Das Stützelement ist in Form einer Kreisscheibe ausgebildet und unmittelbar an dem äußerem Ende 16b des Lagers angeordnet. Andere Formen sind jedoch ebenfalls denkbar, beispielsweise ovale oder eckige Scheiben. An dem anderen äußeren Ende 16a des Lagers ist ebenfalls ein hier nicht gezeigtes Stützelement angeordnet. Die beiden Teile 18a und 18b sind formschlüssig um den Gummischlauch gelegt und an Verbindungsstellen 19a und 19b aneinander befestigt. Die Scheiben sind in diesem Ausführungsbeispiel an dem Lager befestigt. Dies ist jedoch nicht zwingen der Fall, solange gewährleistet ist, dass parallel zum Scharbalken wirkende Kräfte unelastisch abgefangen werden.

Es ist alternativ, je nach Art des Stützelements, möglich, dass dieses im Inneren der Lagerung angeordnet ist. Es können, je nach Art des Stützelements, mehr oder weniger als zwei Stützelemente vorgesehen sein.

Der Scharbalken ist hier hohl dargestellt und hat in diesem Beispiel vier Seiten, sein Querschnitt ist quadratisch. Er kann jedoch auch rund, oval oder mit mehr oder weniger als vier Seiten ausgebildet sein (also z.B. einen dreieckigen oder mehreckigen Querschnitt haben). Auch ein nicht-hohler Scharbalken ist denkbar.

Der Schararm ist entlang des Pfeils 20 um den Scharbalken rotierbar, kann jedoch seitlich, also entlang des Pfeils 21 nicht kippen, da durch die Stützelemente parallel zum Scharbalken wirkende Kräfte unelastisch abgefangen werden.

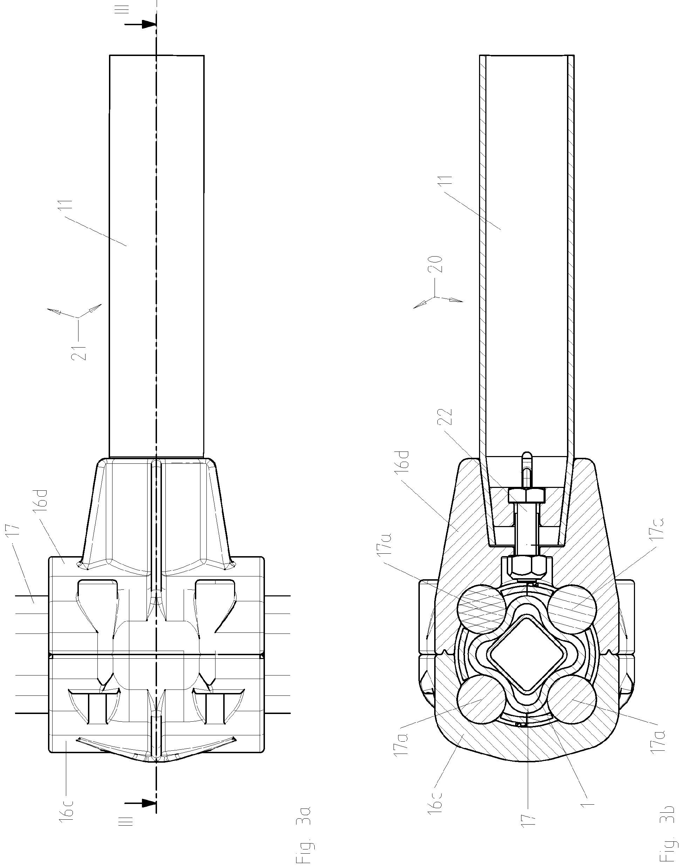

In Fig. 3a ist anhand einer Draufsicht auf den in Fig. 2 gezeigten Teil der Sämaschine angedeutet, wo der Schnitt gelegt wird, welcher in Fig. 3b abgebildet ist, nämlich eine Schnittebene senkrecht zum Boden und entlang der Längsachse des Schararms 11.

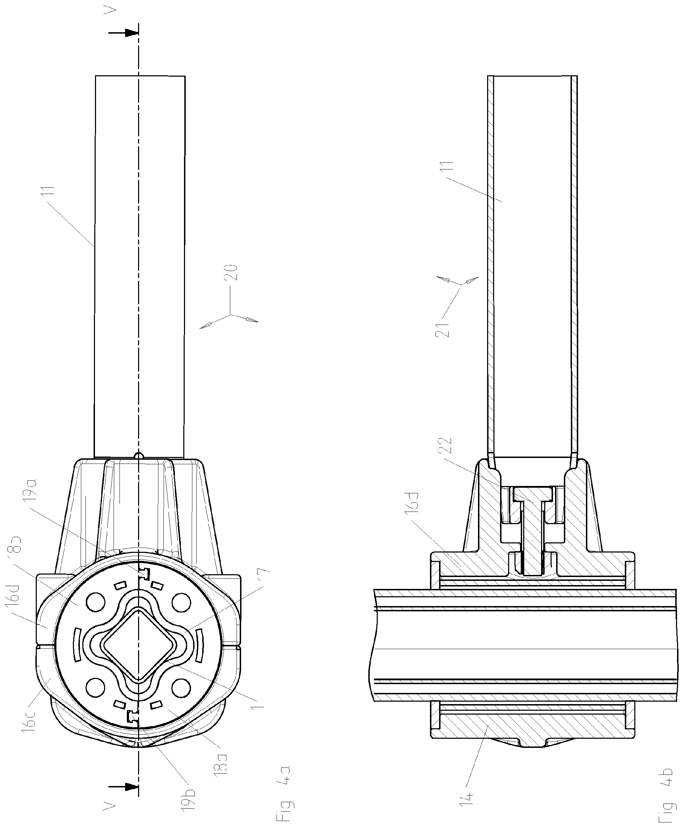

In Fig. 4a ist anhand einer Seitenansicht des in Fig. 2 gezeigten Teils der Sämaschine angedeutet, wo der Schnitt gelegt wird, welcher in Fig. 4b abgebildet ist, nämlich eine Schnittebene parallel zum Boden und entlang der Längsachse des Schararms 11.

In Fig. 3b und 4b kann man erkennen, wie der Schararm 11 an dem Scharbalken gelagert ist, nämlich mit einer ersten Lagerhälfte 16c und einer zweiten Lagerhälfte 16d, die aneinander befestigt sind. Außerdem ist zu erkennen, dass das Federelement zweiteilig ausgebildet ist und nicht nur den in Fig. 2 gezeigten Gummischlauch 17 sondern auch vier Gummirollen 17a aufweist, wobei der Gummischlauch 17 aufgrund seiner Form als Führungselement für die Gummirollen fungiert.

Hat der Scharbalken eine Grundfläche mit mehr oder weniger als vier Ecken kann für jede Fläche des Scharbalkens je eine Gummirolle vorgesehen sein. Die Lagerhälften 16c und 16d sind so miteinander verbunden, dass sie den Scharbalken 11 und das Federelement 17 umschließen. Der Schararm 11 ist mit der zweiten Lagerhälfte 16d mittels einer Schraube 22 verbunden.

Das im Wesentlichen unelastische Abfangen parallel zum Scharbalken wirkender Kräfte kann mittels der oben beschrieben Vorrichtung also folgendermaßen erfolgen: Das als Scheibe ausgebildete Stützelement 18 verhindert, dass die Gummirollen 17a seitlich verschoben werden. Außerdem sind die Gummirollen durch den Gummischlauch 17 geführt. Der Gummischlauch wird von den beiden Teilen 18a und 18b derart umschlossen, dass er an die jeweilige Seite des Scharbalkens gedrückt wird. So sind die Stützelemente derart angeordnet, dass sie Kräfte entlang des Scharbalkens im Wesentlichen unelastisch abfangen, sie können jedoch einer Rotation um den Scharbalken etwas nachgeben.

In dem hier gezeigten Beispiel ist bereits ein Formschluss zwischen dem Stützelement und dem Gummischlauch unmittelbar durch die Form des Stützelements vorhanden. Alternativ kann jedoch ein Formschluss mit mindestens einem Teil des Federelements und/oder dem Scharbalken durch Stellelemente hergestellt werden, beispielsweise indem umfänglich mittels Schrauben Flächen eines Stützelements an das Federelement gedrückt werden. Dies ermöglicht auch ein Nachstellen des Stützelements beispielsweise wenn das Federelement aufgrund von Alterung weniger elastisch ist.

Es versteht sich, dass in dem zuvor beschriebenen Ausführungsbeispiel genannte Merkmale nicht auf diese speziellen Kombinationen beschränkt sind und auch in beliebigen anderen Kombinationen innerhalb des durch die anhängenden Patentansprüche definierten Schutzbereiches möglich sind.

## Patentansprüche

1. Sämaschine mit einem Scharbalken (1), an dem Schararme (11) jeweils über eine elastische Lagerung (16) so verbunden sind, dass sie sich in einem gewissen Maß um den Scharbalken (1) drehen können,
**dadurch gekennzeichnet, dass**
Kräfte, die parallel zum Scharbalken (1) auf die Schararme (11) wirken, im Wesentlichen unelastisch abgefangen werden und dass
die Sämaschine mindestens ein Stützelement (18) umfasst, wobei das Abfangen der parallel zum Scharbalken (1) wirkenden Kräfte mittels des Stützelements (18) erfolgt, das formschlüssig und/oder kraftschlüssig mit dem Scharbalken (1) und/oder mit mindestens einem Teil eines Federelements (17) der Lagerung angeordnet ist.

2. Sämaschine nach Anspruch 1, wobei das Stützelement ein oder mehrere Stellelemente, insbesondere Stellschrauben, umfasst, die zum Herstellen des Kraft- bzw. Formschlusses ausgebildet sind.

3. Sämaschine nach einem der Ansprüche 1 oder 2, wobei der Scharbalken (1) ein mehrkantiger Scharbalken (1) ist und an dem Stützelement (18) für jede Fläche des Scharbalkens (1) mindestens ein Stellelement vorgesehen ist.

4. Sämaschine nach einem der Ansprüche 1 bis 3, wobei das Stützelement (18) einen Flansch, eine Scheibe und/oder eine Schelle umfasst.

5. Sämaschine nach einem der Ansprüche 1 bis 4, wobei das Stützelement (18) aufsteckbar ist, insbesondere entlang des Scharbalkens (1) aufsteckbar.

6. Sämaschine nach einem der Ansprüche 1 bis 5, wobei das Stützelement (18) mindestens zwei Teile (18a, 18b) umfasst, die derart ausgebildet sind, dass sie formschlüssig und/oder kraftschlüssig um den Scharbalken (1) und/oder mindestens einen Teil des Federelements (17) gelegt und miteinander verbunden werden können.

7. Sämaschine nach einem der Ansprüche 1 bis 6, wobei das Stützelement (18) an der Lagerung (16) derart befestigbar ist, dass es in gewissen Maß rotierbar um den Scharbalken (1) angeordnet ist.

8. Sämaschine nach einem der Ansprüche 1 bis 7, wobei das Federelement (17) ausschließlich im Inneren der Lagerung (16) ausgebildet ist oder sich zumindest teilweise weiter entlang des Scharbalkens (1) erstreckt als die Lagerung (16).

9. Sämaschine nach einem der Ansprüche 1 bis 8, wobei das Federelement (17) in Form von Sprungfedern im Inneren der Lagerung (16) oder in Form einer Gummifederung, die entlang des Scharbalkens (1) angeordnet ist, ausgebildet ist, insbesondere in Form einer Gummifederung, die sich zumindest teilweise weiter entlang des Scharbalkens (1) erstreckt, als die Lagerung (16).

10. Sämaschine nach einem der Ansprüche 1 bis 9, wobei das Federelement einen Gummischlauch (17) umfasst, der entlang des Scharbalkens (1) angeordnet ist und den Scharbalken (1) umfänglich umschließt.

11. Sämaschine nach einem der Ansprüche 1 bis 10, wobei das Federelement Gummirollen (17a) umfasst, die entlang des Scharbalkens (1), insbesondere im Inneren der Lagerung (16), angeordnet sind, und wobei an beiden Enden der Lagerung (16) die Stützelemente (18), insbesondere in Form von Scheiben, derart angeordnet sind, dass sie ein Verrutschen der Gummirollen (17a) entlang des Scharbalkens (1) verhindern.

12. Sämaschine nach den Ansprüchen 10 und 11, wobei die Stützelemente (18) formschlüssig und/oder kraftschlüssig mit dem Gummischlauch (17) angeordnet sind.

13. Sämaschine nach einem der vorangegangenen Ansprüche umfassend mehrere Stützelemente (18), wobei die Stützelemente (18) gleich oder unterschiedlich ausgebildet sind.

## Claims

1. Sowing machine with a coulter bar (1), to which coulter arms (11) are connected, each via an elastic bearing (16), in such a manner that they can rotate to a certain extent about the coulter bar (1), **characterized in that** forces which act on the coulter arms (11) parallel to the coulter bar (1) are absorbed substantially inelastically, and **in that** the sowing machine comprises at least one supporting element (18), wherein the forces acting parallel to the coulter bar (1) are absorbed by means of the supporting element (18) which is arranged in a form-fitting and/or force-fitting manner with the coulter bar (1) and/or with at least part of a spring element (17) of the bearing.

2. Sowing machine according to Claim 1, wherein the supporting element comprises one or more adjusting elements, in particular adjusting screws, which are designed for producing the force fit or form fit.

3. Sowing machine according to either of Claims 1 and 2, wherein the coulter bar (1) is a polygonal coulter bar (1), and at least one adjusting element for each surface of the coulter bar (1) is provided on the supporting element (18).

4. Sowing machine according to one of Claims 1 to 3, wherein the supporting element (18) comprises a flange, a disc and/or a clip.

5. Sowing machine according to one of Claims 1 to 4, wherein the supporting element (18) is attachable, in particular attachable along the coulter bar (1).

6. Sowing machine according to one of Claims 1 to 5, wherein the supporting element (18) comprises at least two parts (18a, 18b) which are designed in such a manner that they can be placed in a form-fitting and/or force-fitting manner around the coulter bar (1) and/or around at least part of the spring element (17) and connected to each other.

7. Sowing machine according to one of Claims 1 to 6, wherein the supporting element (18) is fastenable to the bearing (16) in such a manner that it is arranged rotatably to a certain extent around the coulter bar (1).

8. Sowing machine according to one of Claims 1 to 7, wherein the spring element (17) is formed exclusively in the interior of the bearing (16) or at least partially extends further along the coulter bar (1) than the bearing (16).

9. Sowing machine according to one of Claims 1 to 8, wherein the spring element (17) is designed in the form of sprung springs in the interior of the bearing (16) or in the form of a rubber suspension which is arranged along the coulter bar (1), in particular in the form of a rubber suspension which at least partially extends further along the coulter bar (1) than the bearing (16).

10. Sowing machine according to one of Claims 1 to 9, wherein the spring element comprises a rubber tube (17) which is arranged along the coulter bar (1) and circumferentially surrounds the coulter bar (1).

11. Sowing machine according to one of Claims 1 to 10, wherein the spring element comprises rubber rollers (17a) which are arranged along the coulter bar (1), in particular in the interior of the bearing (16), and wherein the supporting elements (18), in particular in the form of discs, are arranged at both ends of the bearing (16) in such a manner that they prevent slipping of the rubber rollers (17a) along the coulter bar (1).

12. Sowing machine according to Claims 10 and 11, wherein the supporting elements (18) are arranged in a form-fitting and/or force-fitting manner with the rubber tube (17).

13. Sowing machine according to one of the preceding claims, comprising a plurality of supporting elements (18), wherein the supporting elements (18) are identical or different in design.

## Revendications

1. Semoir avec une poutre de soc (1) à laquelle sont raccordés des bras de soc (11) respectivement par le biais d'un support (16) élastique de telle sorte qu'ils peuvent tourner dans une certaine mesure autour de la poutre de soc (1),
**caractérisé en ce que**
des forces qui agissent parallèlement à la poutre de soc (1) sur les bras de soc (11) sont reprises de façon essentiellement non élastique, et **en ce que**
le semoir comprend au moins un élément d'appui (18), la reprise des forces agissant parallèlement à la poutre de soc (1) s'effectuant au moyen de l'élément d'appui (18) qui est disposé en liaison de forme et/ou en liaison de force avec la poutre de soc (1) et/ou qui est disposé avec au moins une partie d'un élément de ressort (17) du support.

2. Semoir selon la revendication 1, l'élément de ressort comprenant un ou plusieurs éléments de réglage, en particulier des vis de réglage, qui sont constitués pour la réalisation de la liaison de force ou respectivement de la liaison de forme.

3. Semoir selon l'une des revendications 1 ou 2, la poutre de soc (1) étant une poutre de soc (1) polygonale, et au moins un élément de réglage étant prévu sur l'élément d'appui (18) pour chaque surface de la poutre de soc (1).

4. Semoir selon l'une des revendications 1 à 3, l'élément d'appui (18) comprenant une bride, une rondelle et/ou un collier.

5. Semoir selon l'une des revendications 1 à 4, l'élément d'appui (18) pouvant être enfiché, pouvant en particulier être enfiché le long de la poutre de soc (1).

6. Semoir selon l'une des revendications 1 à 5, l'élément d'appui (18) comprenant au moins deux parties (18a, 18b) qui sont constituées de telle sorte qu'elles peuvent être placées par liaison de forme et/ou par liaison de force autour de la poutre de soc (1) et/ou d'au moins une partie de l'élément de ressort (17) et peuvent être raccordées l'une à l'autre.

7. Semoir selon l'une des revendications 1 à 6, l'élément d'appui (18) pouvant être fixé au support (16) de telle sorte qu'il est disposé dans une certaine mesure de façon rotative autour de la poutre de soc (1).

8. Semoir selon l'une des revendications 1 à 7, l'élément de ressort (17) étant constitué exclusivement dans l'intérieur du support (16) ou s'étendant au moins partiellement plus loin le long de la poutre de soc (1) que le support (16).

9. Semoir selon l'une des revendications 1 à 8, l'élément de ressort (17) étant constitué sous la forme de ressorts à boudin dans l'intérieur du support (16) ou sous la forme d'une suspension en caoutchouc qui est disposée le long de la poutre de soc (1), en particulier sous la forme d'une suspension en caoutchouc qui s'étend au moins partiellement plus loin le long de la poutre de soc (1) que le support (16).

10. Semoir selon l'une des revendications 1 à 9, l'élément de ressort comprenant un tuyau en caoutchouc (17) qui est disposé le long de la poutre de soc (1) et entoure la poutre de soc (1) de façon périphérique.

11. Semoir selon l'une des revendications 1 à 10, l'élément de ressort comprenant des rouleaux en caoutchouc (17a) qui sont disposés le long de la poutre de soc (1), en particulier dans l'intérieur du support (16) et, aux deux extrémités du support (16), les éléments d'appui (18), en particulier sous la forme de rondelles, étant disposés de telle sorte qu'ils empêchent un glissement des rouleaux en caoutchouc (17a) le long de la poutre de soc (1).

12. Semoir selon les revendications 10 et 11, les éléments d'appui (18) étant disposés par liaison de forme et/ou par liaison de force avec le tuyau en caoutchouc (17).

13. Semoir selon l'une des revendications précédentes, comprenant plusieurs éléments d'appui (18), les éléments d'appui (18) étant constitués de façon identique ou différente.
